# EUROPEAN PATENT APPLICATION

(11) **EP 1 447 728 A2**
(43) Date of publication of application: **18.08.2004**
(21) Application number: 04250688.1
(22) Date of filing: 09.02.2004
(51) Int. Cl.: G05B 19/19, G05B 19/4067

(54) **Position control device**

(30) Priority: 12.02.2003 JP 2003034203
(71) Applicant: FANUC LTD, Minamitsuru-gun, Yamanashi 401-0597 (JP)
(72) Inventor: Fujibayashi, Kentaro, Musashino-shi Tokyo 180-0013 (JP); Hishikawa, Tetsuo, c/o Room 12-407, Minamitsuru-gun Yamanashi 401-0511 (JP)
(74) Representative: Billington, Lawrence Emlyn

(57) **Abstract**

A position of a movable part of a machine is obtained from a command movement for a controlled axis of the machine. The position of a virtual axis with respect to time and an I/O signal are obtained. The position of the controlled axis and the state of the I/O signal are stored in association with the position of the virtual axis, and cam shape data and I/O signal state data are obtained. During an electronic cam operation, the virtual axis position is controlled by means of virtual axis control means. Corresponding to the position of the virtual axis, the position of the controlled axis or the I/O signal state is read from the cam shape data and the I/O signal state data and outputted, whereby the controlled axis is driven.

## Description

### BACKGROUND OF THE INVENTION

### Field of the Invention

The present invention relates to a position control device for controlling the positions of movable parts, such as various industrial machines, robots, machine tools, etc.

### Description of the Related Art

If a position control device that controls the positions of movable parts of machines, such as various industrial machines, robots, machine tools, etc., undergoes abnormal conditions such that its operation is interrupted, each machine and its peripheral equipment should be reversely moved for the sake of safety along a path on which the movable part of the machine has traced until stoppage. In repeatedly executing the same operation to adjust the machine's behavior or the like, moreover, the machine should be returned along the path on which the movable part has traced so that forward and reverse strokes of the same operation can be repeated.

A numerical control device having a reversal function is generally known as a device that moves a machine reversely along the path on which the movable part has traced. This device has a memory for reversal that can be previously stored with execution data. The execution data are read in response to a reversal command so that the machine can be returned along its path of movement for machining or processing (see Japanese Patent Application Laid-Open No. 63-250705, for example).

Since the conventional reversal function described above is highly complicated and requires large-scale software, it is hard to set it in a low-priced position control device, such as a low priced numerical control device. Further, this reversal operation cannot be performed in response to commands that are based on PMC (programmable machine controller) axis control by a ladder.

Furthermore, there is no means that can record and reproduce on-off operation of I/O signals to be applied to and delivered from the control device.

### SUMMARY OF THE INVENTION

A position control device for controlling an axis to be controlled (hereinafter referred to as controlled axis) in accordance with a command movement according to a first aspect of the present invention comprises: means for calculating the position of the controlled axis on the basis of the command movement for the controlled axis; means for calculating the position of a virtual axis which is assumed to be moving at a speed settled depending on a given function; means for storing the calculated position of the controlled axis in association of the calculated position of the virtual axis; and means for driving the controlled axis in a manner such that the controlled axis synchronously follows the virtual axis as a master axis in accordance with the position stored in said means for calculating the position of the controlled axis. With this arrangement, the reversal operation for the controlled axis can be executed or the forward-reverse operation can be executed repeatedly.

A position control device for controlling a controlled axis in accordance with a command movement according to a second aspect of the present invention comprises: means for acquiring the state of an I/O signal obtained by an I/O signal control means using a ladder; means for calculating the position of a virtual axis which is assumed to be moving at a speed settled depending on a given function; means for storing the state of the I/O signal obtained by said means for acquiring the state of an I/O signal in association with the position of the virtual axis calculated by said means for calculating the position of a virtual axis; and means for carrying out control of the I/O signal in accordance with the position of the virtual axis, based on the I/O signal state stored in said means for storing the state of the I/O signal. With this arrangement, the I/O signal state can be adjusted to the forward and reverse operating directions.

A position control device for controlling a controlled axis in accordance with a command movement according to a third aspect of the present invention comprises: means for calculating the position of the controlled axis on the basis of the command movement for the controlled axis; means for acquiring the state of an I/O signal obtained by an I/O signal control means using a ladder; means for calculating the position of a virtual axis which is assumed to be moving at a speed settled depending on a given function; means for storing the position of the controlled axis with respect to the position of the virtual axis and the state of the I/O signal; and means for carrying out the drive of the controlled axis and control of the I/O signal in a manner such that the controlled axis synchronously follows the virtual axis as a master axis in accordance with the position and the I/O signal state stored in said means for storing the position of the controlled axis and the state of the I/O signal. With this arrangement, the reversal operation for the controlled axis can be executed or the forward-reverse operation can be executed repeatedly. Further, the I/O signal state can be controlled in accordance with this operation.

In the position control devices according to the second and third aspects, the aforementioned means for carrying out control of the I/O signal may include exclusive control means for preventing the I/O signal stored in the aforementioned means for storing the state of the I/O signal and an I/O signal using a ladder from being written doubly. Further, the position control device may comprise means for selecting the I/O signal to be stored in said means for storing the state of the I/O signal.

In each position control device according to the present invention constructed in this manner, the reversal operation and repeated operation can be carried out with ease, and the I/O signal state can be controlled in concert with the reversal operation.

### BRIEF DESCRIPTION OF THE DRAWINGS

The above and other objects and features of the invention will be more apparent from the ensuing description of embodiments taken in connection with the accompanying drawings, in which:
FIG. 1 is a diagram illustrating an outline of an device according to the invention;
FIG. 2 is a diagram showing the position of a controlled axis;
FIG. 3 is a diagram showing the position of a virtual axis;
FIG. 4 is a diagram illustrating the relation between the respective positions of the virtual axis and the controlled axis;
FIG. 5 is a block diagram showing the principal part of a numerical control device according to one embodiment of the invention;
FIG. 6 is a flowchart mainly showing processes for cam shape data and I/O signal state acquisition, among other processes according to the embodiment; and
FIG. 7 is a flowchart showing processes for electronic cam driving operation according to the embodiment.

### DESCRIPTION OF THE EMBODIMENTS

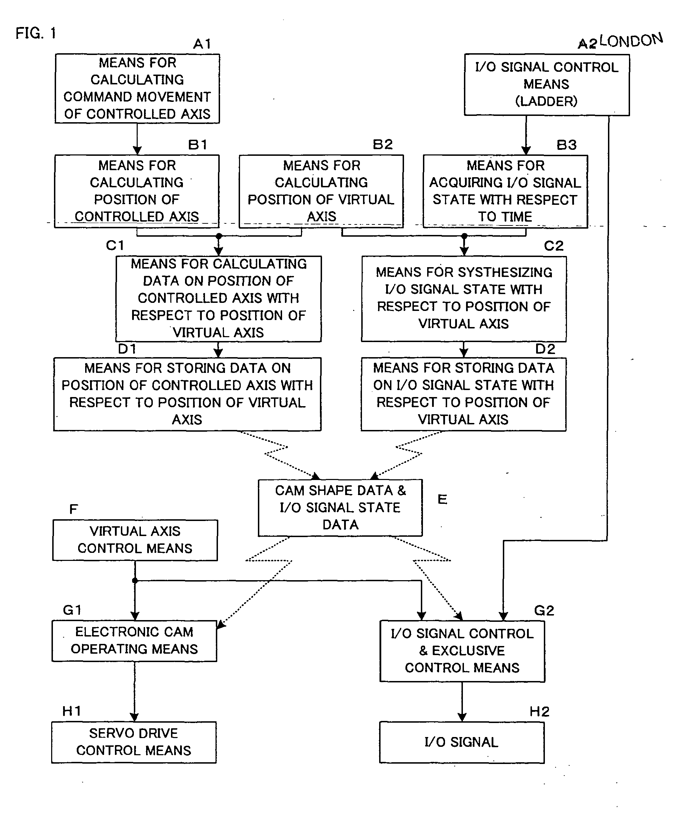

FIG. 1 is a diagram illustrating an outline of a device according to the present invention.

Based on an NC program or PMC axis control (axis control by sequence control based on a ladder in a PMC or the like), means A1 for calculating a command movement of a controlled axis delivers the command movement to servo drive control means for drivingly controlling the axis with every given period. Normally, the command movement is delivered to the servo drive control means only. According to the present invention, however, the command movement is also delivered to means B1 for calculating the position of the controlled axis. The position calculating means B1 calculates the position of the controlled axis corresponding to time.

The device is also provided with means B2 for calculating the position of a virtual axis that moves at a speed settled depending on a given function. The position calculating means B2 calculates the position of the virtual axis corresponding to time. Position data calculating means C1 calculates position data for the controlled axis with respect to the position of the virtual axis, and the calculated data is stored in means D1 for storing data on the position of the controlled axis with respect to the position of the virtual axis.

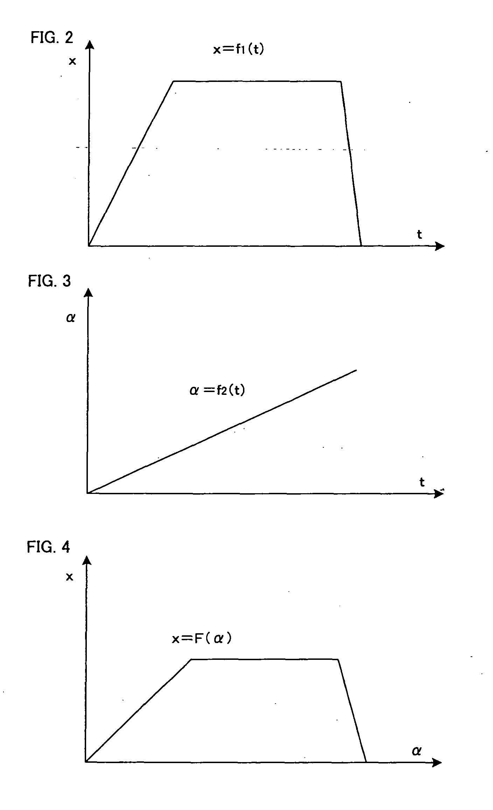

Based on the command movement, for example, the position calculating means B1 for the controlled axis calculates a position x of the controlled axis as a function (x = f1(t)) of time t, as shown in FIG. 2. If the speed is fixed, moreover, virtual axis position calculating means B2 calculates a position α of the virtual axis as a function (α = f2(t)) of time, as shown in FIG. 3. As shown in FIG. 4, furthermore, means C1 for calculating the position data of the controlled axis calculates the position x of the axis in association with the position α of the virtual axis, and the position data storing means D1 stores the calculated position. Thus, the position x of the controlled axis is stored as a function (x = F(α)) of the position α of the virtual axis.

The data thus stored in means D1 for storing data on the position of the controlled axis with respect to the position of the virtual axis can be regarded as cam shape data E for an electronic cam that represents position data wherein the virtual axis is regarded as a master axis and the controlled axis is regarded as a slave axis that follows the master axis.

On the other hand, means B3 for acquiring the I/O signal state with respect to time acquires the state of an I/O signal necessary for the controlled axis, among other I/O signals that are delivered from I/O signal control means A2, in accordance with a ladder in a PMC or the like, in association with time. Means C2 for synthesizing an I/O signal state with respect to the position of the virtual axis obtains the state of the I/O signal in association with the position of the virtual axis, and the obtained state of the I/O signal is stored in means D2 for storing data on the I/O signal state corresponding to the position of the virtual axis.

The data thus stored in means D2 for storing data on the I/O signal state can be regarded as I/O signal state data E that represents the I/O signal state corresponding to the position of the virtual axis.

The cam shape data and the I/O signal data stored in the storing means D1 and D2 are used in executing reversal operation or the like when the operation of a machine is stopped under abnormal conditions.

Forming electronic cam operating means G1 using the cam shape data, and regarding the virtual axis as a master axis and the controlled axis as a slave axis, the position of the controlled axis (slave axis) with respect to the position of the virtual axis (master axis) that is delivered from virtual axis control means F is obtained from the came shape data E, and delivered as a movement command to servo drive control means H1.

The virtual axis control means F is composed of manual driving means, PMC axis control means, and a manual pulse generator, which are arranged in a position control device, such as a numerical control device. These component means are operated to output the position of the virtual axis. Alternatively, the position of the virtual axis may be outputted by executing an NC program for the virtual axis. In association with the output position delivered from the virtual axis control means F, the position of the controlled axis is read from the cam shape data E, and the movement command is delivered to the servo drive control means H1.

On the other hand, I/O signal control and exclusive control means G2 reads the I/O signal data E from the storing means D2 that stores the I/O signal state corresponding to the position of the virtual axis that is delivered from the virtual axis control means F. It also reads the I/O signals that are delivered from I/O signal control means A2. Thereupon, the state of the I/O signal necessary for the controlled axis which is stored in the storing means D2 and the state of other I/O signals which are delivered from the control means A2 are outputted. Thus, an I/O signal associated with the cam shape data for the signal read from the storing means D2 is outputted lest the signal read from the storing means D2 and the I/O signal delivered from the control means A2 be superposed (H2).

According to the present invention, as described above, the position of the controlled axis is stored as the cam shape data in association with the position of the virtual axis, and the I/O signal state is also stored. Therefore, the reversal operation or repeated operation can be executed with use of the stored cam shape data or I/O signal state. Moreover, a reversal or repeated operation can be freely changed in speed or suspended, though the manner of operation is not changed, since the speed at a virtual axis position delivered from the virtual axis control means F can be changed freely.

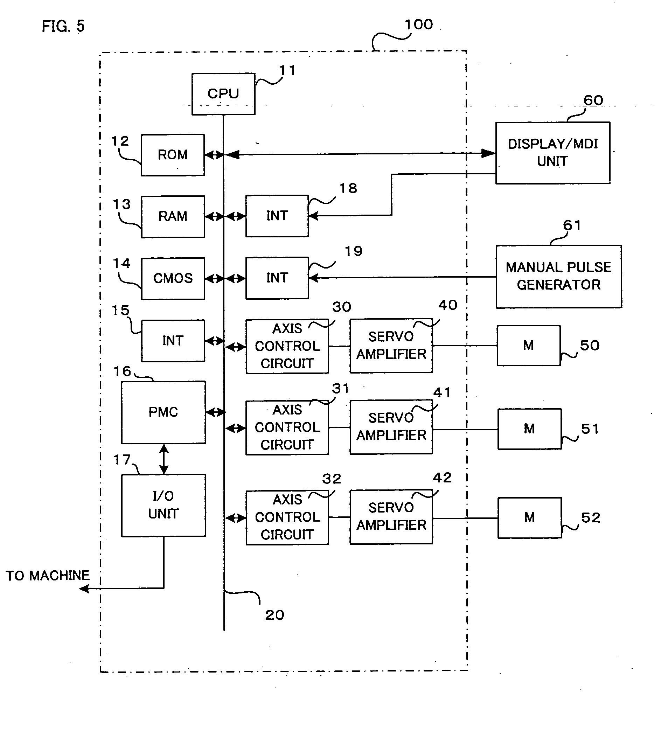

FIG. 5 is a block diagram of a numerical control device as a position control device according to an embodiment of the invention. A CPU 11 is a processor that generally controls a numerical control device 100. The CPU 11 reads a system program in a ROM 12 through a bus 20, and controls the whole numerical control device in accordance with the system program. A RAM 13 is loaded with temporary calculation data, display data, and various other data that are inputted by an operator by means of a display/MDI unit 60. According to the present invention, in particular, the device has storage sections for storing the cam shape data and I/O signal data E. These sections constitute means D1 for storing data on the positional of the controlled axis with respect to the position of the virtual axis and means D2 for storing data on the sate of I/O signal.

A CMOS memory 14, which is backed up by means of a battery (not shown), is formed as a nonvolatile memory that can maintain the state of storage even when the numerical control device 100 is switched off. The CMOS memory 14 is stored with an NC program that is read through an interface 15, an NC program that is inputted through the display/MDI unit 60, etc.

The interface 15 enables the numerical control device 100 to be connected to an external apparatus. NC programs or the like are read from the external apparatus. A PMC (programmable machine controller) 16 delivers a signal to an auxiliary device (e.g., actuator such as a robot hand for tool replacement) of a machine tool through an I/O unit 17 and controls it in accordance with a sequence program that is stored in the numerical control device 100. Signals from various switches and the like on a control panel that is attached to the body of the machine tool are delivered to the CPU 11 after they are processed as required.

The display/MDI unit 60 is a manual data input device that is provided with a display, keyboard, etc. An interface 18 receives commands and data from the keyboard of the display/MDI unit 60 and deliver them to the CPU 11. An interface 19 is connected to a manual pulse generator 61 and receives pulses. The manual pulse generator 61 is mounted on the control panel and generates distribution pulse as it is operated manually. In the present embodiment, the manual pulse generator 61 is used as the aforementioned virtual axis control means F.

Axis control circuits 30 to 32 for individual axes receive the respective command movements of the axes and deliver commands for the axes to servo amplifiers 40 to 42, respectively. On receiving the commands, the servo amplifiers 40 to 42 drive servomotors 50 to 52 for the individual axes, respectively. The servomotors 50 to 52 have their respective position-speed detectors therein, and position-speed feedback signals from the position-speed detectors are fed back to the axis control circuits 30 to 32, respectively, thereby effecting position-speed feedback control. The axis control circuits 30 to 32 and the servo amplifiers 40 to 42 constitute servo drive control means H1. The position-speed feedback is omitted in FIG. 5.

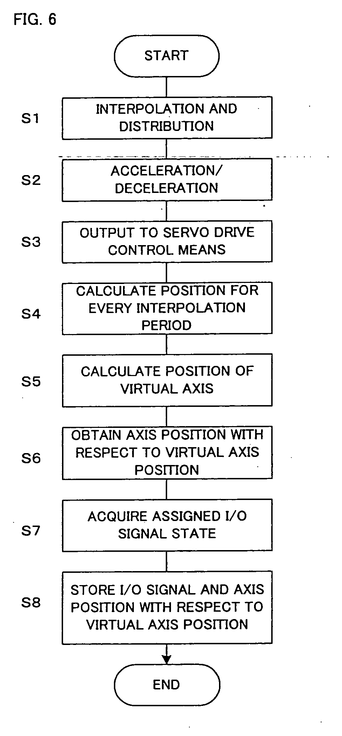

FIG. 6 is a flowchart mainly showing processes for the acquisition of the cam shape data and I/O signal state, which are executed with every given period (interpolation period) by the CPU 11 in the present embodiment.

The CPU 11 reads the NC program stored in the CMOS memory 14 and carries out an interpolation and distribution process in the same manner as in the conventional case in accordance with a movement command given by the NC program. Further, it carries out an acceleration/deceleration process and delivers the processed command movement to the axis control circuits 30 to 32 of the servo drive control means (Steps S1 to S3). In response to the command movement, the servo drive control means carries out position and speed loop control or the like, thereby drivingly controlling the servomotors 50 to 52.

Based on the command movement delivered to the servo drive control means, moreover, the CPU 11 calculates the respective positions of the axes with every interpolation period and obtains the position of the virtual axis (Steps S4 and S5). The position of the virtual axis is obtained as a position for a given function of the time which has elapsed after the start of interpolation and distribution (e.g., a position proportional to the time in case where speed is constant).

The state of the I/O signal necessary for the controlled axis, which is assigned among other I/O signals from the PMC 16, is acquired, and the respective positions of the axes and the I/O signal state are stored in the RAM 13 as the cam shape data and I/O signal state data E, in association with the position of the virtual axis (Steps S6 to S8).

The necessary I/O signal may be selected with use of parameters.

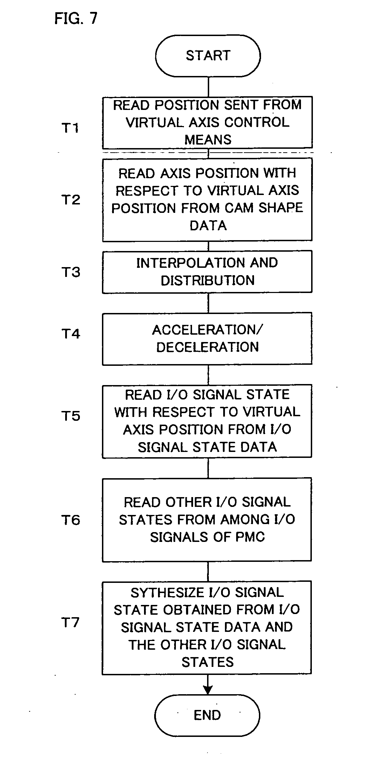

The operation described above is an operation for normal driving. If the operation is stopped or reversed in case of operation failure in this normal driving or if the same operation is reciprocally repeated many times for adjustment, electronic cam operation is executed based on the cam shape data and I/O signal state data E. Giving an electronic cam driving command, the virtual axis control means is operated. If the electronic cam operating command is given, the CPU 11 executes the processes of FIG. 7 with every given period (interpolation period).

In this embodiment, the manual pulse generator 61 constitutes the virtual axis control means. In performing the reversal operation, the generator 61 is reversely operated to generate pulses. Thereupon, the number of generated pulses is subtracted from the value in a register for storing the position of the virtual axis. More specifically, the pulse number is subtracted from the value for the current position as the manual pulse generator 61 is operated in the reverse direction. The CPU 11 reads the position stored in the register (Step T1) and reads the respective positions of the individual axes corresponding to the position of the virtual axis from the cam shape data and I/O signal state data E stored in the RAM 13 (Step T2). Further, the data are subjected to the interpolation, distribution, and acceleration-deceleration processes, and delivered to the servo drive control means (Steps T3 and T4). Thus, the servomotors 50 to 52 for the individual axes are driven and moved in the reverse direction.

Further, data on the I/O signal state stored in association with the position of the virtual axis is read from the cam shape data and I/O signal state data E stored in the RAM 13 (Step T5). Furthermore, the I/O signal state read from the cam shape data and I/O signal state data E and all the I/O signal states from the PMC 16 except the I/O signal state read from the cam shape data and I/O signal state data E are synthesized and outputted (Steps T6 and T7).

As the reversal operation is carried out in this manner, the I/O signal state is adjusted to the operating position. Thus, the reversal operation that covers the I/O signal state can be realized with ease.

If the same operation is reciprocally repeated many times for adjustment or the like, moreover, the manual pulse generator 61 for use as the virtual axis control means is operated alternately in the forward and reverse directions. By doing this, the same operation that covers the I/O signal state can be carried out repeatedly in the forward and reverse directions for the same location.

In the embodiment described above, the manual pulse generator 61 is used as the virtual axis control means. Alternatively, however, manual operation means, such as means for jog feeding, may be used as virtual axis control means. In this case, the manual operation means is used in place of the manual pulse generator 61 to give a movement command to the virtual axis. Further, PMC axis control by the PMC 16 may be used as the virtual axis control means. In this case, the PMC 16 gives a movement command to the virtual axis for electronic cam operation. Furthermore, an NC program for electronic cam operation may be originated such that the virtual axis control means can fulfill its function to drive the virtual axis by executing the NC program.

According to the present invention, the position of the controlled axis and the I/O signal state are previously stored on the basis of the position of the virtual axis, and the reversal operation and the repeated forward-reverse operation can be executed easily and simply in accordance with the stored data.

## Claims

1. A position control device for controlling a controlled axis in accordance with a command movement, comprising:
means for calculating the position of the controlled axis on the basis of the command movement for the controlled axis;
means for calculating the position of a virtual axis which is assumed to be moving at a speed settled depending on a given function;
means for storing the calculated position of the controlled axis in association of the calculated position of the virtual axis; and
means for driving the controlled axis in a manner such that the controlled axis synchronously follows the virtual axis as a master axis in accordance with the position stored in said means for calculating the position of the controlled axis.

2. A position control device for controlling a controlled axis in accordance with a command movement, comprising:
means for acquiring the state of an I/O signal obtained by an I/O signal control means using a ladder;
means for calculating the position of a virtual axis which is assumed to be moving at a speed settled depending on a given function;
means for storing the state of the I/O signal obtained by said means for acquiring the state of an I/O signal in association with the position of the virtual axis calculated by said means for calculating the position of a virtual axis; and
means for carrying out control of the I/O signal in accordance with the position of the virtual axis, based on the I/O signal state stored in said means for storing the state of the I/O signal.

3. A position control device for controlling a controlled axis in accordance with a command movement, comprising:
means for calculating the position of the controlled axis on the basis of the command movement for the controlled axis;
means for acquiring the state of an I/O signal obtained by an I/O signal control means using a ladder;
means for calculating the position of a virtual axis which is assumed to be moving at a speed settled depending on a given function;
means for storing the position of the controlled axis with respect to the position of the virtual axis and the state of the I/O signal; and
means for carrying out the drive of the controlled axis and control of the I/O signal in a manner such that the controlled axis synchronously follows the virtual axis as a master axis in accordance with the position and the I/O signal state stored in said means for storing the position of the controlled axis and the state of the I/O signal.

4. The position control device according to claim 2 or 3, wherein said means for carrying out control of the I/O signal includes exclusive control means for preventing the I/O signal stored in said means for storing the state of the I/O signal and an I/O signal using a ladder from being written doubly.

5. The position control device according to claim 2 or 3, which further comprises means for selecting the I/O signal to be stored in said means for storing the state of the I/O signal.
